# EUROPÄISCHE PATENTANMELDUNG

(11) **EP 4 847 425 A1**
(43) Veröffentlichungstag der Anmeldung: **02.12.2026**
(21) Anmeldenummer: 26179937.3
(22) Anmeldetag: 20.05.2026
(51) Int. Cl.: B65G 47/84, B65G 19/02, B65G 19/22, B65G 45/10

(54) **FÖRDERVORRICHTUNG, VERPACKUNGSSYSTEM UND ZUGEHÖRIGES VERFAHREN**

(30) Priorität: 27.05.2025 DE 102025120797
(71) Anmelder: Krones AG, 93073 Neutraubling (DE)
(72) Erfinder: VOGELSBERGER, Markus, 93073 Neutraubling (DE)
(74) Vertreter: v. Bezold & Partner Patentanwälte - PartG mbB

(57) **Zusammenfassung**

Die Erfindung betrifft u.a. eine Fördervorrichtung (16) zum Fördern von Artikeln (A). Die Fördervorrichtung (16) weist eine Überschubfläche (20), über die die Artikel (A) schiebbar sind, und ein umlaufendes Förderelement (24) auf. Die Fördervorrichtung (16) weist ferner mehrere Schubbalken (28) auf, die beabstandet voneinander an dem umlaufenden Förderelement (24) angebracht und von dem umlaufenden Förderelement (24) umlaufend bewegbar sind zum Schieben der Artikel (A) über die Überschubfläche (20). Die Fördervorrichtung (16) weist ferner ein Abstreifelement (30) zum Streifen über die Überschubfläche (20) auf. Das Abstreifelement (30) ist an einem der mehreren Schubbalken (28) zum Mitbewegen mit dem Schubbalken (28) angeordnet.

## Beschreibung

### Technisches Gebiet

Die Erfindung betrifft eine Fördervorrichtung zum Fördern von Artikeln. Die Erfindung betrifft ferner ein Verpackungssystem mit einer Fördervorrichtung und einer Verpackungsvorrichtung. Die Erfindung betrifft ferner ein Verfahren zum Schmieren und/oder Reinigen einer Fördervorrichtung oder eines Verpackungssystems.

### Technischer Hintergrund

Verpackungssysteme zum Verpacken von Artikeln bzw. Artikelgruppen zu Gebinden sind bekannt. Beispielsweise offenbart die WO 2022/152487 A1 ein Verpackungssystem.

Ein solches Verpackungssystem kann eine oder mehrere Überschubplatten aufweisen, über die die Artikel (-gruppen) in definierten Abständen mittels Schubbalken (Schubstangen) in Vorbereitung auf den eigentlichen Verpackungsvorgang in definierten Abständen zueinander geschoben werden können.

Die Überschubplatten können speziell beschichtet sein, damit die Flaschen darüber gleiten können. Um die Gleitfunktion im Betrieb aufrecht zu erhalten, ist es wichtig, dass die Überschubplatten regelmäßig gereinigt werden. Die Reinigung erfolgt herkömmlich manuell. Die Produktion muss unterbrochen werden. Insbesondere beim Transport von kleineren Flaschen (≤ 500ml/20 OZ) ist aufgefallen auf, dass das Reinigungsintervall vergleichsweise kurz sein muss, z. B. rd. 45 min. Das Reinigungsintervall kann bspw. abhängig von Bandschmiermittel, Standboden der Flasche und Schwerpunkt der Flasche sein. Wird die Reinigung ausgelassen, fallen laufend Flaschen auf der Überschubplatte um.

Der Erfindung liegt die Aufgabe zu Grunde, eine verbesserte Technik zum Fördern von Artikeln, vorzugsweise Behältern, über eine Überschubfläche, z. B. eines Verpackungssystems, zu schaffen, mit der vorzugsweise ein Risiko zum Umkippen der Artikel verringert werden kann.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine Fördervorrichtung zum Fördern (und bspw. Einteilen und/oder Beabstanden) von (z. B. vorgruppierten) Artikeln (z. B. Artikelgruppen), vorzugsweise Behältern. Die Fördervorrichtung weist eine (z. B. stationäre und/oder plane/ebene) Überschubfläche, über die die Artikel schiebbar sind, auf. Die Fördervorrichtung weist ein umlaufendes (z. B. motorisch antreibbares) Förderelement, vorzugsweise Förderkette oder Förderriemen, auf. Die Fördervorrichtung weist mehrere (z. B. starre) Schubbalken auf, die beabstandet voneinander an dem umlaufenden Förderelement angebracht und von dem umlaufenden Förderelement umlaufend bewegbar sind zum Schieben der Artikel über die Überschubfläche (z. B. in einer Transportrichtung der Fördervorrichtung). Die Fördervorrichtung weist ein Abstreifelement zum Streifen über die Überschubfläche auf. Das Abstreifelement ist an einem der mehreren Schubbalken zum Mitbewegen mit dem Schubbalken angeordnet, vorzugsweise zum Verteilen von (z. B. flüssigem oder festem) Reinigungs- und/oder Schmiermittel auf der Überschubfläche beim Streifen über die Überschubfläche (z. B. in einer Transportrichtung der Fördervorrichtung).

Vorteilhaft kann die Fördervorrichtung ermöglichen, dass ein Risiko zum Umfallen der Artikel wesentlich verringert werden kann. Das Abstreifelement kann ein auf der Überschubfläche appliziertes Reinigungs- und/oder Schmiermittel vorteilhaft auf der Überschubfläche verteilen, während es sich mit dem Schubbalken mitbewegt. Vorteilhaft kann damit eine Verteilung des Reinigungs- und/oder Schmiermittel automatisiert und vorteilhaft entlang im Wesentlichen einer gesamten Länge der Überschubfläche gewährleistet werden. Vorzugsweise kann die Reinigung und Schmierung direkt im Betrieb erfolgen, wodurch kein Produktionsstopp notwendig ist und somit letztendlich eine wirtschaftliche Reinigung/Schmierung ermöglicht wird.

In einem Ausführungsbeispiel ist mindestens eines erfüllt von:
- das Abstreifelement ist elastisch biegsam;
- das Abstreifelement ist aus einem elastischen Material, vorzugsweise Silikonmaterial oder Gummimaterial; und
- das Abstreifelement ist lösbar an dem Schubbalken angebracht, vorzugsweise mittels einer Schraubverbindung.

Vorteilhaft kann durch die Elastizität erreicht werden, dass das Abstreifelement die Überschubfläche nicht beschädigt, dennoch gut an dieser anliegt und keine übermäßige Reibung zwischen dem Abstreifelement und der Überschubfläche auftritt. Die lösbare Anbringung kann vorteilhaft eine einfache Montage und Demontage ermöglichen, z. B. zum Ermöglichen eines einfachen Austauschens bei einem fortgeschrittenen Verschleiß des Abstreifelements.

In einem weiteren Ausführungsbeispiel ist mindestens eines erfüllt von:
- das Abstreifelement ist plattenförmig (z. B. streifenförmig) oder bürstenförmig;
- das Abstreifelement ist quer zu einer Transportrichtung der Fördereinrichtung angeordnet;
- das Abstreifelement ist ausgerichtet zum Kontaktieren der Überschubfläche in einem spitzen Winkel;
- das Abstreifelement ist zum Streifen über die Überschubfläche in einem Linienkontakt oder einem Flächenkontakt ausgebildet;
- das Abstreifelement ist an einer Unterseite des Schubbalkens angeordnet und/oder steht über eine Unterseite des Schubbalkens hinaus nach unten über; und
- an oder in dem Abstreifelement ist ein Magnet angeordnet.

Vorteilhaft kann auf diese Weise eine besonders effektive und effiziente Verteilung des Reinigungs- und/oder Schmiermittels erreicht werden.

In einer Ausführungsform weist die Fördervorrichtung ferner ein, vorzugsweise starres, Halteelement, vorzugsweise Haltewinkel, auf, wobei das Halteelement das Abstreifelement an dem Schubbalken, vorzugsweise lösbar, anbringt. Vorteilhaft kann mittels des Halteelements eine einfache Montage und Demontage ermöglicht werden, z. B. zum Ermöglichen eines einfachen Austauschens bei einem fortgeschrittenen Verschleiß des Abstreifelements.

In einer weiteren Ausführungsform ist mindestens eines erfüllt von:
- das Abstreifelement liegt flächig an dem Halteelement an;
- das Abstreifelement ist mit dem Halteelement verklebt;
- das Halteelement richtet das Abstreifelement zum Kontaktieren der Überschubfläche in einem spitzen Winkel aus;
- das Halteelement ist lösbar an dem Schubbalken angebracht, vorzugsweise mittels einer Schraubverbindung;
- das Halteelement umgreift den Schubbalken abschnittsweise (z. B. L-förmig oder C-förmig); und
- an oder in dem Haltelement ist ein Magnet angeordnet.

Vorteilhaft kann auf diese Weise ermöglicht werden, dass das Halteelement das Abstreifelement wie gewünscht formen und/oder ausrichten kann, um den gewünschten Kontakt mit der Überschubfläche zu ermöglichen. Vorteilhaft ist es somit nicht notwendig, eine Spezialkonstruktion für das Abstreifelement vorzusehen.

In einer Ausführungsvariante weist die Fördervorrichtung ferner eine (z. B. automatische) Reinigungs- und/oder Schmiervorrichtung zum Applizieren eines (z. B. flüssigen und/oder synthetischen und/oder silikonhaltigen) Reinigungs- und/oder Schmiermittels auf die Überschubfläche, vorzugsweise im Wesentlichen über eine gesamte Transportbreite der Überschubfläche, auf. Vorteilhaft wird durch die Reinigungs- und/oder Schmiervorrichtung ermöglicht, dass nicht versehentlich manuell mit nicht zulässigem Reinigungsmittel (z. B. alkalisches Reinigungsmittel, welches eine Beschichtung der Überschubfläche beschädigt) gereinigt wird. Vorteilhaft kann die Reinigungs- und/oder Schmiervorrichtung zudem ermöglichen, ein automatisches Reinigungs-/Schmierintervall festzulegen, z. B. abhängig von einer Transportgeschwindigkeit oder Transportleistung der Fördervorrichtung (z. B. gesteuert von einer Steuerungseinrichtung der Fördervorrichtung).

In einer weiteren ferner Ausführungsvariante weist die Fördervorrichtung ferner eine Steuerungseinrichtung auf, die dazu konfiguriert ist, die Reinigungs- und/oder Schmiervorrichtung abhängig von einer überwachten Position des Schubbalkens, an dem das Abstreifelement angeordnet ist, zu betreiben, vorzugsweise zu aktivieren. Vorteilhaft kann damit erreicht werden, dass genau dann Reinigungs- und/oder Schmiermittel appliziert, wenn das Abstreifelement die Reinigungs- und/oder Schmiervorrichtung erreicht. Vorteilhaft kann so eine effektive und effiziente Verteilung des Reinigungs- und/oder Schmiermittels erreicht werden.

In einem Ausführungsbeispiel weist die Fördervorrichtung ferner einen, vorzugsweise magnetischen, Marker, der an dem Schubbalken, an dem das Abstreifelement angeordnet ist, angeordnet ist, auf. Die Fördervorrichtung kann ferner eine Erfassungseinrichtung (z. B. induktiver Initiator) zum Erfassen des Markers, vorzugsweise beim Passieren der Erfassungseinrichtung, und eine Steuerungseinrichtung, die dazu konfiguriert ist, die Reinigungs- und/oder Schmiervorrichtung abhängig von einer Signalausgabe der Erfassungseinrichtung zu betreiben, vorzugsweise zu aktivieren, aufweisen. Vorteilhaft kann auf diese Weise eine konstruktiv und steuerungstechnisch einfach umzusetzende Technik zum effektiven und effizienten Verteilung des Reinigungs- und/oder Schmiermittels ermöglicht werden.

In einem weiteren Ausführungsbeispiel ist die Steuerungseinrichtung ferner dazu konfiguriert, die Reinigungs- und/oder Schmiervorrichtung abhängig von der Signalausgabe der Erfassungseinrichtung so zum Applizieren des Reinigungs- und/oder Schmiermittels auf die Überschubfläche zu aktivieren, dass:
- das Reinigungs- und/oder Schmiermittel abgegeben wird unmittelbar bevor der Schubbalken, an dem der Marker und das Abstreifelement angeordnet sind, die Reinigungs- und/oder Schmiervorrichtung passiert, und/oder
- die Reinigungs- und/oder Schmiervorrichtung das Reinigungs- und/oder Schmiermittel dann auf einen Applikationsbereich der Überschubfläche abgibt, wenn der Schubbalken, an dem der Marker und das Abstreifelement angeordnet sind, unmittelbar vor Erreichen des Applikationsbereichs ist.

Alternativ oder zusätzlich kann die Reinigungs- und/oder Schmiervorrichtung bspw. in regelmäßigen Zeitabständen das Reinigungs- und/oder Schmiermittel auf die Überschubfläche applizieren (z. B. gesteuert von einer/der Steuerungseinrichtung).

In einer Ausführungsform weist die Fördervorrichtung ferner mehrere (z. B. durch Gassenwände gebildete und/oder einspurige) Gassen für die Artikel auf. Die mehreren Gassen können oberhalb von der Überschubfläche angeordnet sein. Vorzugsweise kann das Abstreifelement so an dem Schubbalken angeordnet sein, dass es beim Bewegen des Schubbalkens in einer Transportrichtung der Fördervorrichtung in eine der mehreren Gassen zum Streifen über die Überschubfläche entlang der jeweiligen Gasse eintaucht. Vorteilhaft kann mittels der Gassen ein verbesserter Zulauf und eine genauere Querpositionierung der Artikel ermöglicht werden. Zudem kann vorteilhaft ermöglicht werden, dass das Verteilen des Reinigungs- und/oder Schmiermittels mittels des Abstreifelements genauer erfolgen kann, nämlich nur in der oder den Gassen. Vorteilhaft lässt sich auf diese Weise Reinigungs- und/oder Schmiermittel einsparen.

In einer weiteren Ausführungsform weist die Fördervorrichtung ferner mindestens ein weiteres Abstreifelement auf, das an dem Schubbalken, an dem das Abstreifelement angeordnet ist, angeordnet ist und vorzugsweise wie das Abstreifelement ausgebildet ist. Bevorzugt kann das mindestens eine weitere Abstreifelement so an dem Schubbalken (z. B. beabstandet zu dem Abstreifelement entlang einer Längsachse des Schubbalkens) angeordnet sein, dass es beim Bewegen des Schubbalkens in der Transportrichtung der Fördervorrichtung in mindestens eine weitere Gasse der mehreren Gassen zum Streifen über die Überschubfläche entlang der jeweiligen weiteren Gasse eintaucht. Vorteilhaft kann auf diese Weise das Reinigungs- und/oder Schmiermittel in den mehreren Gassen durch die Abstreifelemente verteilt werden.

Beispielsweise kann je Gasse mindestens ein Abstreifelement vorhanden sein.

In einer Ausführungsvariante ist mindestens eines erfüllt von:
- das umlaufende Förderelement ist oberhalb von und/oder (z. B vertikal) beabstandet zu der Überschubfläche angeordnet;
- das umlaufende Förderelement läuft vollständig oberhalb von der Überschubfläche um;
- die mehreren Schubbalken sind oberhalb von und/oder (z. B vertikal) beabstandet zu der Überschubfläche angeordnet;
- die mehreren Schubbalken sind quer zur einer Transportrichtung der Fördervorrichtung angeordnet;
- die Fördervorrichtung weist ferner ein weiteres umlaufendes Förderelement, vorzugsweise Förderkette oder Förderriemen, auf, das gegenüberliegend zu dem umlaufenden Förderelement, vorzugsweise oberhalb der Überschubfläche, angeordnet ist, wobei die mehreren Schubbalken an dem weiteren umlaufenden Förderelement beabstandet voneinander angebracht und jeweils zwischen dem umlaufenden Förderelement und dem weiteren umlaufenden Förderelement angeordnet sind; und
- die Fördervorrichtung weist ferner eine Überschubplatte auf, die oberseitig die Überschubfläche aufweist.

Ein weiterer Aspekt betrifft ein Verpackungssystem zum Verpacken von (z. B. vorgruppierten) Artikeln, vorzugsweise Behältern. Das Verpackungssystem weist eine Fördervorrichtung wie hierin offenbart und eine Verpackungsvorrichtung zum Verpacken der Artikel mit einem Verpackungsmaterial (z. B. Verpackungsfolie oder (z. B. Karton-) Verpackungsbehälter) auf. Vorzugsweise kann die Verpackungsvorrichtung (z. B. direkt) (artikel-) stromabwärts von der Fördervorrichtung oder oberhalb von der Überschubfläche der Fördervorrichtung angeordnet sein, vorzugsweise zum Verpacken der mittels der mehreren Schubbalken bewegten Artikel. Vorteilhaft kann die hierin offenbarte Fördervorrichtung somit in einem Verpackungssystem genutzt werden. Es versteht sich, dass alternative Anwendungen für die Fördervorrichtung ebenfalls möglich sind.

Ein weiterer Aspekt der vorliegenden Offenbarung betrifft eine Behälterbehandlungsanlage (z. B. zum Temperieren, Herstellen, Reinigen, Beschichten, Prüfen, Abfüllen, Verschließen, Pasteurisieren, Dekorieren, Etikettieren, Bedrucken, Beschriften, Laserbeschriften und/oder Verpacken von Behältern für flüssige oder pastöse Medien, vorzugsweise Getränke, flüssige Nahrungsmittel oder Produkte aus der Pharma- oder Health-Care-Industrie). Die Behälterbehandlungsanlage kann die Fördervorrichtung wie hierin offenbart oder das Verpackungssystem wie hierin offenbart aufweisen. Die Behälterbehandlungsanlage kann beispielsweise eine Getränkeabfüllanlage sein.

Beispielsweise können die Behälter als Flaschen, Dosen, Kanister, Kartons, Flakons, Phiolen, Tuben usw. ausgeführt sein.

Vorzugsweise kann sich der Begriff "Steuerungseinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein. Die Steuerungseinrichtung kann beispielsweise eine Zentralsteuerungseinrichtung sein oder mehrere dezentral bzw. verteilt angeordnete Steuerungseinheiten aufweisen.

Ein weiterer Aspekt betrifft ein Verfahren zum Schmieren und/oder Reinigen einer Fördervorrichtung wie hierin offenbart oder eines Verpackungssystems wie hierin offenbart. Das Verfahren weist auf:
- Applizieren eines (z. B. flüssigen und/oder synthetischen und/oder silikonhaltigen) Reinigungs- und/oder Schmiermittels auf die Überschubfläche, vorzugsweise mittels einer (z. B. automatischen) Reinigungs- und/oder Schmiervorrichtung; und
- Verteilen des applizierten Reinigungs- und/oder Schmiermittels (z. B. in einer Transportrichtung der Fördervorrichtung) über die Überschubfläche mittels des Abstreifelements beim Umlaufen des Schubbalkens, an dem das Abstreifelement angeordnet ist, z. B. beim Bewegen des Schubbalkens in einer Transportrichtung der Fördervorrichtung.

Vorteilhaft lassen sich mit dem Verfahren die gleichen Vorteile erzielen, die bereits unter Bezugnahme auf die Fördervorrichtung erläutert wurden.

In einem Ausführungsbeispiel weist das Verfahren ferner auf.
- Beaufschlagen des Abstreifelements zum Kontaktieren der Überschubfläche mittels magnetischer Wechselwirkung zwischen einem Magneten, der in oder an dem Abstreifelement und/oder in oder an einem das Abstreifelement haltenden Halteelement angeordnet ist, und der (z. B. metallischen) Überschubfläche oder einem unter der Überschubfläche angeordnetem metallischen Element; und/oder
- (z. B. direktes oder indirektes) Erfassen einer Position des Schubbalkens, an dem das Abstreifelement angeordnet ist, oder des Abstreifelements (z. B. mittels einer Steuerungseinrichtung und/oder mittels eines an dem Schubbalken angeordneten (z. B. magnetischen) Markers und einer Erfassungseinrichtung (z. B. induktiver Initiator), die den Marker erfasst).

Vorzugsweise kann das Applizieren des Reinigungs- und/oder Schmiermittels auf die Überschubfläche (z. B. gesteuert von einer Steuerungseinrichtung) abhängig von der erfassten Position erfolgen, bspw. zum Applizieren des Reinigungs- und/oder Schmiermittels auf einen Applikationsbereich der Überschubfläche unmittelbar bevor das Abstreifelement den Applikationsbereich erreicht und/oder unmittelbar bevor das Abstreifelement die Reinigungs- und/oder Schmiervorrichtung passiert.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Seitenansicht eines Verpackungssystems;
- Figur 2: eine schematische Draufsicht auf einen Abschnitt einer Fördervorrichtung;
- Figur 3: eine perspektivische Ansicht eines Abschnitts der Fördervorrichtung;
- Figur 4: eine schematische Darstellung eines Abstreifelements;
- Figur 5: eine schematische Darstellung eines alternativen Abstreifelements; und
- Figur 6: eine schematische Darstellung eines weiteren alternativen Abstreifelements.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

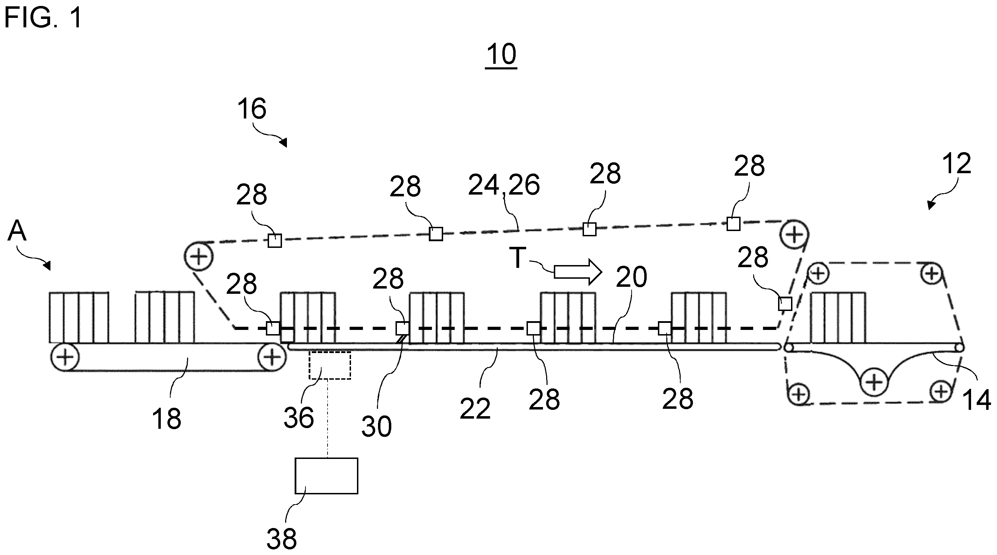

Die Figur 1 zeigt ein Verpackungssystem 10 zum Verpacken von Artikeln A. Bevorzugt kann das Verpackungssystem 10 die Artikel A in Gebinden, d.h. in Gruppen von jeweils mehreren Artikeln A, verpacken.

Die Artikel A können vorzugsweise Behälter, wie bspw. Flaschen oder Dosen, sein. Besonders bevorzugt ist das Verpackungssystem 10 in einer Behälterbehandlungsanlage zum Verpacken der Behälter umfasst. Beispielsweise kann das Verpackungssystem 10 stromaufwärts von einem Palettiersystem der Behälterbehandlungsanlage angeordnet sein.

Das Verpackungssystem 10 weist eine Fördervorrichtung 16 und eine Verpackungsvorrichtung 12 auf.

Die Verpackungsvorrichtung 12 ist zum Verpacken der Artikel A mit einem Verpackungsmaterial ausgebildet. Bevorzugt verpackt die Verpackungsvorrichtung 12 die Artikel A zu Gebinden.

Beispielsweise kann die Verpackungsvorrichtung 12 jeweils mehrere Artikel A mit einer Verpackungsfolie (thermoplastisches Verpackungsmaterial) einschlagen, die bspw. stromabwärts in einem Schrumpftunnel aufgeschrumpft werden kann. Beispielsweise kann die Verpackungsvorrichtung 12 ein Folien-Einschlagmodul aufweisen, bei dem Artikelgruppen mit Folie umhüllt werden. Die Folie kann bspw. auf Rollen bereitgestellt und über Folientänzer dem Einschlagmodul zugeführt werden.

Es ist auch möglich, dass die Verpackungsvorrichtung 12 jeweils mehrere Artikel A mit einem Verpackungsbehälter versieht, z. B. mit einem gefalteten Kartonzuschnitt, zum Zusammenhalten der Artikel A. Beispielsweise flächige und durch Karton und/oder Pappe gebildete Verpackungszuschnitte können auch als PAD bzw. Unterlage ohne seitliche, vordere und/oder hintere Laschen ausgebildet sein, wobei das PAD bzw. die Unterlage eine ebene oder im Wesentlichen ebene Aufstandsfläche für eine jeweilige Gruppe an Artikeln A bereitstellt. In weiteren Ausführungsformen können die Verpackungszuschnitte als Tray ausgebildet sein, welches seitliche und in Richtung nach oben zu faltende Laschen besitzt.

Die Verpackungsvorrichtung 12 kann bspw. eine eigene Fördereinrichtung 14, z. B. einen Bandförderer oder einen Mattenkettenförderer, aufweisen und die Artikel A während des Förderns mittels der Fördereinrichtung 14 mit dem Verpackungsmaterial verpacken. Die Verpackungsvorrichtung 12 bzw. deren Fördereinrichtung 14 kann stromabwärts von der Fördervorrichtung 16 zum Empfangen der Artikel A von der Fördervorrichtung 16 angeordnet sein. Die Fördereinrichtung 14 ist bevorzugt eine Horizontalfördereinrichtung.

Alternativ ist es bspw. möglich, dass die Verpackungsvorrichtung 12 oberhalb von einer Überschubfläche 20 der Fördervorrichtung 16 angeordnet ist. Die Verpackungsvorrichtung 12 kann dann bspw. die Artikel A verpacken, während die Artikel A von der Fördervorrichtung 16 über die Überschubfläche 20 geschoben werden.

Die Fördervorrichtung 16 dient zum Fördern der Artikel A in einer Transportrichtung T. Bevorzugt kann die Fördervorrichtung 16 bereits vorgruppierte Artikel A in zueinander vorbestimmte Abstände bringen bzw. die vorgruppierten Artikel A einteilen. Die Fördervorrichtung 16 ist bevorzugt eine Horizontalfördervorrichtung.

Die Fördervorrichtung 16 kann mit einem Zulaufförderer 18 zum Empfangen der, bevorzugt vorgruppierten, Artikel A verbunden sein. Der Zulaufförderer 18 ist bevorzugt ein Horizontalförderer.

Bevorzugt kann der Zulaufförderer 18 mit einer Einteilvorrichtung verbunden sein (nicht in Figur 1 dargestellt). Die Einteilvorrichtung kann die Artikel A (vor-) gruppieren. Beispielsweise können mittels der Einteilvorrichtung aus Artikelreihen jeweils Artikelgruppen, bei denen die gemeinsam gruppierten Artikel A jeweils hintereinander angeordnet sind, abgetrennt werden. Die Artikelgruppen können dann auf dem Zulaufförderer 18 zu der Fördervorrichtung 16 gefördert werden.

Nachfolgend ist die Fördervorrichtung 16 unter Bezugnahme auf die Figuren 1 bis 3 näher beschrieben.

Die Fördervorrichtung 16 weist eine Überschubfläche 20, mindestens ein umlaufendes Förderelement 24, 26, mehrere Schubbalken 28 und mindestens ein Abstreifelement 30 auf. Optional kann die Fördervorrichtung 16 bspw. mehrere Gassen 32, eine Reinigungs- und/oder Schmiervorrichtung 36 und/oder eine Steuerungseinrichtung 38 aufweisen.

Die Überschubfläche 20 kann eine ebene (planare) Fläche sein. Die Artikel A können über die Überschubfläche 20 geschoben werden. Die Überschubfläche 20 ist bspw. rechteckig. Bevorzugt ist die Überschubfläche 20 stationär. Vorzugsweise ist die Überschubfläche 20 horizontal ausgerichtet.

Es ist möglich, dass die Überschubfläche 20 beschichtet ist, z. B mit einer reibungsverringernden Beschichtung.

Beispielsweise kann die Fördervorrichtung 16 eine Überschubplatte 22 aufweisen. Die Überschubplatte 22 kann bspw. ein- oder mehrteilig sein. Die Überschubplatte 22 kann die Überschubfläche 20 aufweisen. Bevorzugt kann die Überschubfläche 20 an einer Oberseite der Überschubplatte 22 angeordnet sein.

Das mindestens eine Förderelement 24, 26 ist ein umlaufendes Förderelement / ein Endlosförderelement. Das mindestens eine Förderelement 24, 26 dient zum Fördern der Schubbalken 28, die wiederum zum Fördern der Artikel A dienen. Bevorzugt ist das mindestens eine Förderelement 24, 26 ringförmig oder geschlossen. Das mindestens eine Förderelement 24 kann bspw. als Förderketten oder Förderriemen ausgeführt sein.

Bevorzugt sind zwei Förderelemente 24, 26 umfasst, wie nachfolgend beschrieben. Im Prinzip kann es jedoch auch ausreichend sein, nur ein Förderelement 24 vorzusehen. Die beiden Förderelemente 24, 26 können einander gegenüberliegen. Die beiden Förderelemente 24, 26 können bspw. an einander entgegengesetzten Längsaußenseiten der Fördervorrichtung 16 angeordnet sein.

Das mindestens eine Förderelement 24, 26 kann bspw. außerhalb einer Transportstrecke der Fördervorrichtung 16 umlaufen.

Das mindestens eine Förderelement 24, 26 kann oberhalb von der Überschubfläche 20 angeordnet ist. Bevorzugt läuft das mindestens eine Förderelement 24, 26 vollständig oberhalb von der Überschubfläche 20 um. Beispielsweise kann ein Lasttrum (Zugtrum) des mindestens einen Förderelements 24, 26 und ein Leertrum des mindestens einen Förderelements 24, 26 oberhalb von der Überschubfläche 20 angeordnet sein. Beispielsweise kann der Leertrum oberhalb von dem Zugtrum angeordnet sein.

Das mindestens eine Förderelement 24, 26 kann im Umlauf geführt sein. Beispielsweise kann das mindestens eine Förderelement 24, 26 zumindest abschnittsweise in einem jeweiligen Führungskanal der Fördervorrichtung 16 geführt sein. Beispielsweise kann der Führungskanal oberhalb von der Überschubfläche 20 angeordnet sein.

Bevorzugt kann ein Umlauf des Förderelements 24 in einer Vertikalebene liegen. Optional kann ein Umlauf des Förderelements 26 in einer weiteren Vertikalebene liegen, die parallel beabstandet zu der Vertikalebene ist.

Das mindestens eine Förderelement 24, 26 kann bspw. mittels eines Antriebsrads angetrieben sein. Beispielsweise kann das mindestens eine Förderelement 24, 26 um das Antriebsrad gelegt sein. Das Antriebsrad kann bspw. ein Kettenrad oder eine Riemenscheibe sein. Das Antriebsrad kann bspw. von einer Antriebseinheit angetrieben werden. Die Antriebseinheit kann bspw. ein Elektromotor sein. Beispielsweise kann das Antriebsrad oberhalb von der Überschubfläche 20 angeordnet sein.

Das mindestens eine Förderelement 24, 26 kann bspw. mittels mindestens eines Umlenkrads (Leerlaufrads) für den Umlauf umgelenkt werden. Beispielsweise kann das mindestens eine Förderelement 24, 26 um das mindestens eine Umlenkrad gelegt sein. Ein Umlenkrad kann bspw. ein Kettenrad oder eine Riemenscheibe sein. Beispielsweise kann das mindestens eine Umlenkrad oberhalb von der Überschubfläche 20 angeordnet sein.

Die Schubbalken 28 sind voneinander beabstandet an dem mindestens einen Förderelement 24, 26 angebracht. Im Einzelnen können die Schubbalken 28 bezüglich einer Transportrichtung T der Fördervorrichtung 16 und/oder bezüglich eines Längsverlaufs des mindestens einen Förderelements 24, 26 beabstandet voneinander an dem mindestens einen Förderelement 24, 26 angebracht sein. Bevorzugt sind die Schubbalken 28 äquidistant entlang des mindestens einen Förderelements 24, 26 angeordnet.

Vorzugsweise sind die Schubbalken 28 jeweils zwischen den zwei Förderelementen 24, 26 angeordnet. Die Schubbalken 28 können bspw. zwischen einander gegenüberliegenden Innenseiten der zwei Förderelemente 24, 26 angeordnet sein.

Bevorzugt trägt das mindestens eine Förderelement 24, 26 die Schubbalken 28. Beispielsweise können die zwei Förderelemente 24, 26 die Schubbalken 28 zwischen sich tragen.

Die Schubbalken 28 sind von dem mindestens einen Förderelement 24, 26 umlaufend bewegbar, nämlich um den Umlauf des mindestens einen Förderelements 24, 26. Die Schubbalken 28 können von dem mindestens einen Förderelement 24, 26 im Umlauf angetrieben und geführt sein.

Das mindestens eine Förderelemente 24, 26 kann die Schubbalken 28 entlang einer Transportstrecke über die Überschubfläche 20 in einer Transportrichtung T der Fördervorrichtung 16 oberhalb der Überschubfläche 20 zum Schieben der Artikel A über die Überschubfläche 20 bewegen. In einem Rücklauf kann das mindestens eine Förderelemente 24, 26 die Schubbalken 28 entgegen der Transportrichtung T zurückbewegen.

Vorzugsweise kann der Rücklauf oberhalb von der Transportstrecke über die Überschubfläche 20 angeordnet sein. Beispielsweise können die Schubbalken 28 von dem mindestens einen Förderelement 24, 26 an einem Ende der Transportstrecke über die Überschubfläche 20 zunächst nach oben und dann entgegen der Transportrichtung T bewegt werden. An einem Ende des Rücklaufs können die Schubbalken 28 von dem mindestens einen Förderelement 24, 26 bevorzugt wieder nach unten zu einem Beginn der Transportstrecke über die Überschubfläche 20 bewegt werden.

Die Schubbalken 28 können oberhalb von und vertikal beabstandet zu der Überschubfläche 20 angeordnet sein. Auch entlang der Transportstrecke der Fördervorrichtung 16 können die Schubbalken 28 oberhalb von und vertikal beabstandet zu der Überschubfläche 20 von dem mindestens einen Förderelement 24, 26 bewegt werden.

Die Schubbalken 28 können die Artikel A über die Überschubfläche 20 schieben. Beim Schieben über die Überschubfläche 20 mittels der Schubbalken 28 können die Artikel A bodenseitig auf der Überschubfläche 20 gleiten.

Die Schubbalken 28 können bspw. länglich, leistenförmig oder stabförmig sein. Die Schubbalken 28 können auch als Schubstäbe, Einteilstäbe oder Einteilbalken bezeichnet werden. Eine Kontaktfläche der Schubbalken 28 zum rückseitigen Kontaktieren der Artikel A beim Schieben über die Überschubfläche 20 kann bspw. plan / eben sein oder bspw. Taschen für die Artikel A aufweisen. Die Kontaktfläche ist bevorzugt vertikal ausgerichtet. Eine Längsachse der Kontaktfläche kann bevorzugt quer zu einer Transportrichtung T der Fördervorrichtung 16 verlaufen.

Bevorzugt werden die Schubbalken 28 in einer Transportrichtung T der Fördervorrichtung 16 mit einer Geschwindigkeit von dem mindestens einen Förderelement 24, 26 bewegt, die größer als eine Fördergeschwindigkeit des Zulaufförderers 18 ist. Die von den Schubbalken 28 rückseitig geschobenen Artikel A bzw. Artikelgruppen können anfangs beim Schieben über die Überschubfläche 20 (kurzzeitig) beschleunigt werden.

Das mindestens eine Abstreifelement 30 dient zum Streifen über die Überschubfläche 20. Vorzugsweise kann so auf die Überschubfläche 20 appliziertes Reinigungs- und/oder Schmiermittel mittels des mindestens einen Abstreifelements 30 über die Überschubfläche 20 verteilt werden.

Das mindestens eine Abstreifelement 30 ist an einem der Schubbalken 28 angeordnet. Das mindestens eine Abstreifelement 30 kann sich entsprechend mit dem im Umlauf bewegten Schubbalken 28 mitbewegen. Beim Mitbewegen kann das mindestens eine Abstreifelement 30 beim Bewegen in einer Transportrichtung T der Fördervorrichtung 16 über die Überschubfläche 20 streifen.

Beispielsweise kann das mindestens eine Abstreifelement 30 an einer Unterseite des Schubbalkens 28 angeordnet sein und/oder über die Unterseite des Schubbalkens 28 hinaus nach unten überstehen.

Bevorzugt ist das mindestens eine Abstreifelement 30 elastisch biegsam. Das mindestens eine Abstreifelement 30 kann bspw. aus einem elastischen Material, vorzugsweise Silikonmaterial oder Gummimaterial, sein.

Das mindestens eine Abstreifelement 30 kann bspw. plattenförmig, z. B. streifenförmig, sein. Es ist auch möglich, dass das mindestens eine Abstreifelement 30 bürstenförmig ist. Beispielsweise kann das mindestens eine Abstreifelement 30 einen Grundkörper und mehrere Borsten, die an dem Grundkörper gehalten sind, aufweisen.

Vorzugsweise ist das mindestens eine Abstreifelement 30 quer zu einer Transportrichtung T der Fördervorrichtung 16 angeordnet. Bevorzugt kann das mindestens eine Abstreifelement 30 so ausgerichtet sein, dass es die Überschubfläche 20 in einem spitzen Winkel kontaktiert. Der Kontakt zwischen der Überschubfläche 20 und dem jeweiligen Abstreifelement 30 kann bspw. ein Linienkontakt (z. B. quer zur Transportrichtung T) oder einem Flächenkontakt sein.

Es ist möglich, dass ein Abstreifelement 30 oder mehrere Abstreifelemente 30 vorhanden sind.

Beispielsweise können an mehreren der Schubbalken 28 jeweils mindestens ein Abstreifelement 30 angeordnet sein (nicht in den Figuren dargestellt).

Beispielsweise können mehrere Abstreifelemente 30 gemeinsam an einem Schubbalken 28 angeordnet sein. Die mehreren Abstreifelemente 30 können vorzugsweise entlang einer Längsachse des Schubbalkens 28 nebeneinander, vorzugsweise voneinander beabstandet, angeordnet sein.

Die Gassen 32 können bspw. durch mehrere Gassenwände 34 gebildet sein. Die Gassen 32 (und die Gassenwände 34) können bevorzugt parallel verlaufen. Die Gassen 32 können bspw. direkt nebeneinander verlaufen. Die Gassen 32 können jeweils einspurig sein. Die Gassen 32 können oberhalb von der Überschubfläche 20 angeordnet sein.

Bevorzugt kann eine Breite der Gassen 32 verstellbar sein. Beispielsweise können die Gassenwände 34, vorzugsweise gemeinsam, quer zu einer Transportrichtung T der Fördervorrichtung 16 verstellbar sein. Beispielsweise kann die Breitenverstellung manuell oder motorisch vorgenommen werden.

Vorzugsweise können die Schubbalken 28 beim Schieben der Artikel A in der Transportrichtung T oberhalb von den Gassen 32 bewegt werden, z. B. mit einem Spalt zwischen einer Oberkante der Gassenwände 34 und einer Unterkante des jeweiligen Schubbalkens 28.

Das mindestens eine Abstreifelement 30 kann bevorzugt so an dem jeweiligen Schubbalken 28 angeordnet sein, dass es beim Bewegen des Schubbalkens 28 in der Transportrichtung T in eine der mehreren Gassen 32 zum Streifen über die Überschubfläche 20 entlang der jeweiligen Gasse 32 eintaucht. Entsprechend können bevorzugt mehrere Abstreifelemente 30 vorhanden sein, die beim Bewegen des Schubbalkens 28 in der Transportrichtung T in die mehreren Gassen 32 zum Streifen über die Überschubfläche 20 entlang der jeweiligen Gasse 32 eintauchen können.

Das von dem mindestens einen Abstreifelement 30 zu verteilende Reinigungs- und/oder Schmiermittel kann bspw. manuell auf die Überschubfläche 20 und/oder das mindestens eine Abstreifelement 30 aufgetragen, z. B. aufgesprüht, werden.

Bevorzugt wird das Reinigungs- und/oder Schmiermittel jedoch von der Reinigungs- und/oder Schmiervorrichtung 36 auf die Überschubfläche 20 appliziert. Die Reinigungs- und/oder Schmiervorrichtung 36 ist bspw. in Figur 1 rein schematisch dargestellt.

Die Reinigungs- und/oder Schmiervorrichtung 36 kann das Reinigungs- und/oder Schmiermittel bevorzugt über eine im Wesentlichen gesamte Transportbreite der Überschubfläche 20 applizieren. Das mindestens eine Abstreifelement 30 kann das von der Reinigungs- und/oder Schmiervorrichtung 36 applizierte Reinigungs- und/oder Schmiermittel bevorzugt über eine im Wesentlichen gesamte Länge der Überschubfläche 20 verteilen.

Beispielsweise kann an einem, vorzugsweise stromabwärtsseitigen, Ende der Überschubfläche 20 eine Auffangwanne oder Auffangrinne zum Auffangen eines Restes des Reinigungs- und/oder Schmiermittels angeordnet sein.

Beispielsweise kann die Reinigungs- und/oder Schmiervorrichtung 36 unterhalb von der Überschubfläche 20 (und z. B. der Überschublatte 22) angeordnet sein. Durch Durchgangsöffnungen in der Überschubfläche 20 (und z. B. der Überschublatte 22) kann ein Reinigungs- und/oder Schmiermittel auf die Überschubfläche 20 appliziert werden. Beispielsweise kann in jeder Gasse 32 mindestens eine der Durchgangsöffnungen angeordnet sein.

Es ist auch möglich, dass die Reinigungs- und/oder Schmiervorrichtung 36 oberhalb von der Überschubfläche 20 angeordnet ist. Beispielsweise kann über eine Sprühleiste mit einer oder mehreren Düsen ein Reinigungs- und/oder Schmiermittel auf die Überschubfläche 20 aufgesprüht werden.

Ebenfalls möglich ist, das die Reinigungs- und/oder Schmiervorrichtung 36 so angeordnet ist, dass sie das Reinigungs- und/oder Schmiermittel direkt auf das mindestens eine Abstreifelement 30 appliziert, wodurch das Reinigungs- und/oder Schmiermittel auch indirekt auf die Überschubfläche 20 appliziert wird.

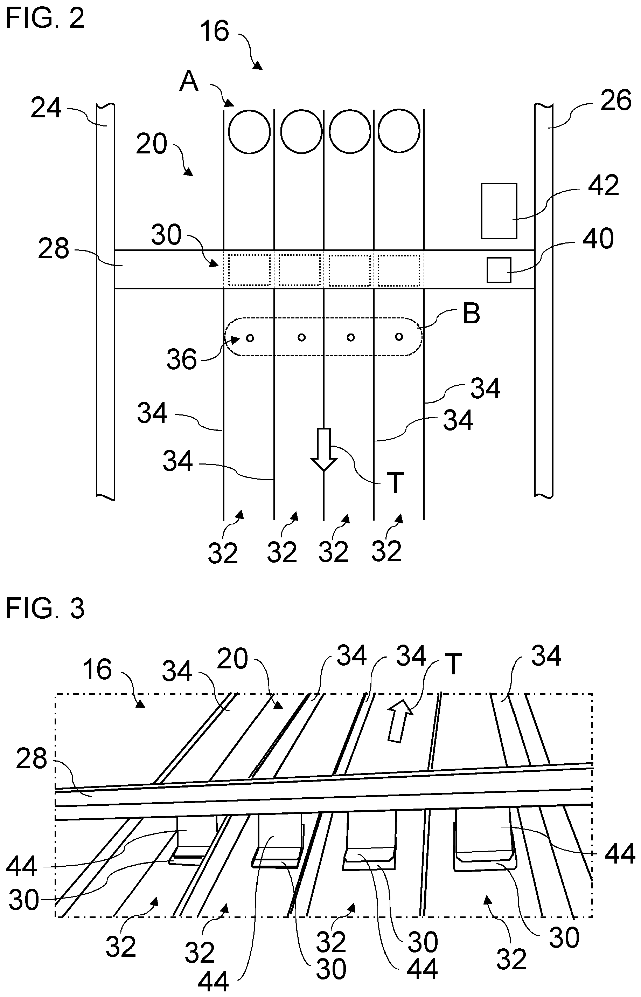

Die Reinigungs- und/oder Schmiervorrichtung 36 kann bspw. an einer Position entlang einer Länge der Überschubfläche 20 angeordnet sein. Beispielsweise kann die Reinigungs- und/oder Schmiervorrichtung 36 so angeordnet sein, dass das Reinigungs- und/oder Schmiermittel in einem Applikationsbereich B auf die Überschubfläche 20 appliziert wird (siehe Figur 2). Der Applikationsbereich B kann vorzugsweise in einem Einlaufabschnitt der Überschubfläche 20 angeordnet sein. Bevorzugt kann der Applikationsbereich B näher an dem Zulaufförderer 18 als an der Verpackungsvorrichtung 12 angeordnet sein.

Bevorzugt kann die Reinigungs- und/oder Schmiervorrichtung 36 mindestens einen Speicherbehälter für das Reinigungs- und/oder Schmiermittel aufweisen. Vorzugsweise kann die Reinigungs- und/oder Schmiervorrichtung 36 mindestens eine Fördereinheit, z. B. eine Pumpe, zum Fördern des Reinigungs- und/oder Schmiermittels zu der Überschubfläche 20 aufweisen.

Die Steuerungseinrichtung 38 kann dazu konfiguriert sein, die Reinigungs- und/oder Schmiervorrichtung 36 zu betreiben (siehe Figur 1). Im Einzelnen kann die Steuerungseinrichtung 38 die Reinigungs- und/oder Schmiervorrichtung 36 zu einem gewünschten Zeitpunkt und/oder für eine gewünschte Zeitdauer zum Abgeben des Reinigungs- und/oder Schmiermittels aktivieren.

Bevorzugt kann die Steuerungseinrichtung 38 die Reinigungs- und/oder Schmiervorrichtung 36 abhängig von einer überwachten Position des Schubbalkens 28, an dem das mindestens eine Abstreifelement 30 angeordnet ist, betreiben, vorzugsweise aktivieren.

Beispielsweise kann die Steuerungseinrichtung 38 die Reinigungs- und/oder Schmiervorrichtung 36 bspw. so aktivieren, dass das Reinigungs- und/oder Schmiermittel in dem Applikationsbereich B abgegeben wird, kurz bevor der Schubbalken 28, an dem das mindestens eine Abstreifelement 30 angeordnet ist, den Applikationsbereich B erreicht.

Eine Position des Schubbalkens 28, an der das mindestens eine Abstreifelement 30 angeordnet ist, kann bspw. rein steuerungstechnisch mittels der Steuerungseinrichtung 38 überwacht werden, z. B. mittels eines sogenannten Softsensors (Software-Sensors). Alternativ oder zusätzlich ist es bspw. möglich, dass die Position mittels einer Sensorik überwacht wird.

Beispielsweise kann ein Marker 40 an dem Schubbalken 28, an dem das mindestens eine Abstreifelement 30 angeordnet ist, angeordnet sein (siehe Figur 2). Der Marker 40 kann bspw. an einer Oberseite oder jeder anderen Seite des Schubbalkens 28 angeordnet sein. Der Marker 40 kann bspw. lösbar an dem Schubbalken 28 angebracht sein oder an dem Schubbalken 28 angeklebt sein.

Der Marker 40 kann bspw. ein Permanentmagnet sein. Jegliche andere Konfiguration des Markers 40, die eine Positionsüberwachung des Markers 40 und damit des Schubbalkens 28 erlaubt, ist ebenfalls denkbar. Beispielsweise kann der Marker 40 eine Kennzeichnung, ein RFID-Tag oder ein NFC-Tag aufweisen.

Eine Erfassungseinrichtung 42 kann den Marker 40 erfassen. Beispielsweise kann die Erfassungseinrichtung 42 den Marker 40 beim Passieren der Erfassungseinrichtung 42 erfassen. Beispielsweise kann die Erfassungseinrichtung 42 ein induktiver Initiator, ein Tag-Lesegerät, eine Kamera oder eine Signalschranke (z. B. Lichtschranke) sein. Bevorzugt kann die Erfassungseinrichtung 42 bezüglich einer Transportrichtung T der Fördervorrichtung 16 stromaufwärts von der Reinigungs- und/oder Schmiervorrichtung 36 und/oder dem Applikationsbereich B angeordnet sein.

Entsprechend kann beim Vorhandensein des Markers 40 und der Erfassungseinrichtung 42 die Steuerungseinrichtung 38 dazu konfiguriert sein, die Reinigungs- und/oder Schmiervorrichtung 36 abhängig von einer Signalausgabe der Erfassungseinrichtung 40 zu betreiben, vorzugsweise zu aktivieren. Die Signalausgabe kann bevorzugt eine Position des erfassten Markers 40 angeben.

Bevorzugt kann die Reinigungs- und/oder Schmiervorrichtung abhängig von der Signalausgabe der Erfassungseinrichtung 42 so zum Abgeben des Reinigungs- und/oder Schmiermittels auf die Überschubfläche 20 aktiviert werden, dass das Reinigungs- und/oder Schmiermittel abgegeben wird unmittelbar bevor der Schubbalken 28, an dem der Marker 40 und das mindestens eine Abstreifelement 30 angeordnet sind, die Reinigungs- und/oder Schmiervorrichtung 36 passiert und/oder unmittelbar bevor der Applikationsbereich B erreicht wird.

Bevorzugt kann mindestens ein Halteelement 44 das mindestens Abstreifelement 30 lösbar an dem Schubbalken 28 anbringen (siehe Figur 3). Beispielsweise kann ein Halteelement 44 mehrere Abstreifelement 30 lösbar an dem Schubbalken 28 anbringen, oder je Abstreifelement 30 kann ein eigenes Halteelement 44 zum lösbaren Anbringen an dem Schubbalken 28 umfasst sein.

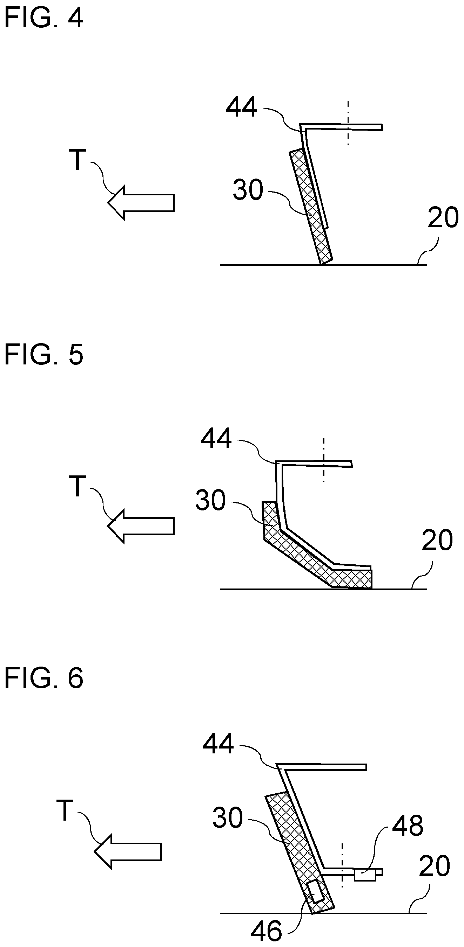

In den Figuren 4 bis 6 sind beispielhaft unterschiedliche Konfigurationen eines Abstreifelements 30 und eines Halteelements 44 dargestellt. Der besseren Übersicht halber ist der Schubbalken 28, an dem das Halteelement 44 lösbar angebracht ist, nicht in den Figuren 4 bis 6 dargestellt.

Vorzugsweise kann das Halteelement 44 ein starres Bauteil, z. B. ein Blechbauteil, sein. Beispielsweise kann das Halteelement 44 als ein Haltewinkel ausgeführt sein.

Das mindestens eine Abstreifelement 30 kann bevorzugt flächig an dem Halteelement 44 anliegen. Beispielsweise kann das mindestens eine Abstreifelement 30 mit dem Halteelement 44 verklebt sein.

Bevorzugt kann das Halteelement 44 das Abstreifelement 30 zum Kontaktieren der Überschubfläche 20 in einem spitzen Winkel zur Überschubfläche 20 ausrichten.

Das Halteelement 44 ist, vorzugsweise lösbar, an dem Schubbalken 28 (nicht dargestellt in den Figuren 4 bis 6) angebracht. Beispielsweise kann das Halteelement 44 an einer Oberseite und/oder einer Unterseite des Schubbalkens 28 angebracht sein. Es ist möglich, dass das Halteelement 44 den Schubbalken 28 abschnittsweise umgreift, z. B. an mindestens zwei Seiten von einer Oberseite, einer Stirnseite, einer Rückseite und einer Unterseite des Schubbalkens 28. Beispielsweise kann das Halteelement 44 an dem Schubbalken 28 mittels mindestens einer Schraubverbindung lösbar angebracht sein.

Es ist möglich, dass in oder an dem Abstreifelement 30 und/oder dem Halteelement 44 ein Magnet 46, 48 angeordnet ist, wie rein beispielhaft in Figur 6 dargestellt ist. Der Magnet 46, 48 ist bevorzugt ein Permanentmagnet.

Der Magnet 46 kann bspw. in einem unteren Abschnitt des Abstreifelements 30 integriert sein. Beispielsweise kann der Magnet 46 form-, stoff- und/oder kraftschlüssig an oder in dem Abstreifelement 30 befestigt sein.

Der Magnet 48 kann bspw. in einem unteren Abschnitt und/oder an einer Unterseite des Haltelements 44 angeordnet oder integriert sein. Beispielsweise kann der Magnet 48 form-, stoff- und/oder kraftschlüssig an oder in dem Haltelement 44 befestigt sein.

Beispielsweise kann der Magnet 46, 48 in magnetische Wechselwirkung mit der bspw. metallischen Überschubfläche 20 (bzw. der bspw. metallischen Überschubplatte 22 - siehe Figur 1) treten, um das Abstreifelement 30 zum Anlegen an die Überschubfläche 20 zu beaufschlagen. Alternativ oder zusätzlich kann der Magnet 46, 48 bspw. in magnetische Wechselwirkung mit einem direkt unterhalb der Überschubfläche 20 (bzw. der Überschubplatte 22 - siehe Figur 1) angeordneten, vorzugsweise plattenförmigen oder streifenförmigen, metallischen Element treten, um das Abstreifelement 30 zum Kontaktieren der Überschubfläche 20 zu beaufschlagen. Vorteilhaft kann damit ein Druck des Abstreifelements 30 auf die Überschubfläche 20 vergrößert werden, um bspw. das Verteilen des Reinigungs- und/oder Schmiermittels zu verbessern.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Überschubfläche, des umlaufenden Förderelements, der mehreren Schubbalken und/oder des Abstreifelements des unabhängigen Anspruchs 1 offenbart und beanspruchbar. Alle Bereichsangaben hierin sind derart offenbart und beanspruchbar zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Verpackungssystem
- 12: Verpackungsvorrichtung
- 14: Fördereinrichtung
- 16: Fördervorrichtung
- 18: Zulaufförderer
- 20: Überschubfläche
- 22: Überschubplatte
- 24: Förderelement
- 26: weiteres Förderelement
- 28: Schubbalken
- 30: Abstreifelement
- 32: Gasse
- 34: Gassenwand
- 36: Reinigungs- und/oder Schmiervorrichtung
- 38: Steuerungseinrichtung
- 40: Marker
- 42: Erfassungseinrichtung
- 44: Halteelement
- 46: Magnet
- 48: Magnet
- A: Artikel / Artikelgruppen
- B: Applikationsbereich
- T: Transportrichtung

## Patentansprüche

1. Fördervorrichtung (16) zum Fördern von Artikeln (A), vorzugsweise Behältern, wobei die Fördervorrichtung (16) aufweist:
eine Überschubfläche (20), über die die Artikel (A) schiebbar sind;
ein umlaufendes Förderelement (24), vorzugsweise Förderkette oder Förderriemen;
mehrere Schubbalken (28), die beabstandet voneinander an dem umlaufenden Förderelement (24) angebracht und von dem umlaufenden Förderelement (24) umlaufend bewegbar sind zum Schieben der Artikel (A) über die Überschubfläche (20); und
ein Abstreifelement (30) zum Streifen über die Überschubfläche (20), wobei das Abstreifelement (30) an einem der mehreren Schubbalken (28) zum Mitbewegen mit dem Schubbalken (28) angeordnet ist, vorzugsweise zum Verteilen von Reinigungs- und/oder Schmiermittel auf der Überschubfläche (20) beim Streifen über die Überschubfläche (20).

2. Fördervorrichtung (16) nach Anspruch 1, wobei mindestens eines erfüllt ist von:
das Abstreifelement (30) ist elastisch biegsam;
das Abstreifelement (30) ist aus einem elastischen Material, vorzugsweise Silikonmaterial oder Gummimaterial; und
das Abstreifelement (30) ist lösbar an dem Schubbalken (28) angebracht, vorzugsweise mittels einer Schraubverbindung.

3. Fördervorrichtung (16) nach Anspruch 1 oder Anspruch 2, wobei mindestens eines erfüllt ist von:
das Abstreifelement (30) ist plattenförmig oder bürstenförmig;
das Abstreifelement (30) ist quer zu einer Transportrichtung (T) der Fördereinrichtung angeordnet;
das Abstreifelement (30) ist ausgerichtet zum Kontaktieren der Überschubfläche (20) in einem spitzen Winkel;
das Abstreifelement (30) ist zum Streifen über die Überschubfläche (20) in einem Linienkontakt oder einem Flächenkontakt ausgebildet; und
das Abstreifelement (30) ist an einer Unterseite des Schubbalkens (28) angeordnet und/oder steht über eine Unterseite des Schubbalkens (28) hinaus nach unten über; und
an oder in dem Abstreifelement (30) ist ein Magnet (46) angeordnet.

4. Fördervorrichtung (16) nach einem der vorherigen Ansprüche, ferner aufweisend:
ein, vorzugsweise starres, Halteelement (44), vorzugsweise Haltewinkel, wobei das Halteelement (44) das Abstreifelement (30) an dem Schubbalken (28), vorzugsweise lösbar, anbringt.

5. Fördervorrichtung (16) nach Anspruch 4, wobei mindestens eines erfüllt ist von:
das Abstreifelement (30) liegt flächig an dem Halteelement (44) an;
das Abstreifelement (30) ist mit dem Halteelement (44) verklebt;
das Halteelement (44) richtet das Abstreifelement (30) zum Kontaktieren der Überschubfläche (20) in einem spitzen Winkel aus;
das Halteelement (44) ist lösbar an dem Schubbalken (28) angebracht, vorzugsweise mittels einer Schraubverbindung;
das Halteelement (44) umgreift den Schubbalken (28) abschnittsweise; und
an oder in dem Haltelement (44) ist ein Magnet (48) angeordnet.

6. Fördervorrichtung (16) nach einem der vorherigen Ansprüche, ferner aufweisend:
eine Reinigungs- und/oder Schmiervorrichtung (36) zum Applizieren eines Reinigungs- und/oder Schmiermittels auf die Überschubfläche (20), vorzugsweise im Wesentlichen über eine gesamte Transportbreite der Überschubfläche (20).

7. Fördervorrichtung (16) nach Anspruch 6, ferner aufweisend:
eine Steuerungseinrichtung (38), die dazu konfiguriert ist, die Reinigungs- und/oder Schmiervorrichtung (36) abhängig von einer überwachten Position des Schubbalkens (28), an dem das Abstreifelement (30) angeordnet ist, zu betreiben, vorzugsweise zu aktivieren.

8. Fördervorrichtung (16) nach Anspruch 6, ferner aufweisend:
einen, vorzugsweise magnetischen, Marker (40), der an dem Schubbalken (28), an dem das Abstreifelement (30) angeordnet ist, angeordnet ist;
eine Erfassungseinrichtung (42) zum Erfassen des Markers (40), vorzugsweise beim Passieren der Erfassungseinrichtung (42); und
eine Steuerungseinrichtung (38), die dazu konfiguriert ist, die Reinigungs- und/oder Schmiervorrichtung (36) abhängig von einer Signalausgabe der Erfassungseinrichtung (42) zu betreiben, vorzugsweise zu aktivieren.

9. Fördervorrichtung (16) nach Anspruch 8, wobei:
die Steuerungseinrichtung (38) ferner dazu konfiguriert ist, die Reinigungs- und/oder Schmiervorrichtung (36) abhängig von der Signalausgabe der Erfassungseinrichtung (42) so zum Applizieren des Reinigungs- und/oder Schmiermittels auf die Überschubfläche (20) zu aktivieren, dass:
- das Reinigungs- und/oder Schmiermittel abgegeben wird unmittelbar bevor der Schubbalken (28), an dem der Marker (40) und das Abstreifelement (30) angeordnet sind, die Reinigungs- und/oder Schmiervorrichtung (36) passiert, und/oder
- die Reinigungs- und/oder Schmiervorrichtung (36) das Reinigungs- und/oder Schmiermittel dann auf einen Applikationsbereich (B) der Überschubfläche (20) abgibt, wenn der Schubbalken (28), an dem der Marker (40) und das Abstreifelement (30) angeordnet sind, unmittelbar vor Erreichen des Applikationsbereichs (B) ist.

10. Fördervorrichtung (16) nach einem der vorherigen Ansprüche, ferner aufweisend:
mehrere Gassen (32) für die Artikel (A), wobei die mehreren Gassen (32) oberhalb von der Überschubfläche (20) angeordnet sind;
wobei:
das Abstreifelement (30) so an dem Schubbalken (28) angeordnet ist, dass es beim Bewegen des Schubbalkens (28) in einer Transportrichtung (T) der Fördervorrichtung (16) in eine der mehreren Gassen (32) zum Streifen über die Überschubfläche (20) entlang der jeweiligen Gasse (32) eintaucht.

11. Fördervorrichtung (16) nach Anspruch 10, ferner aufweisend:
mindestens ein weiteres Abstreifelement (30), das an dem Schubbalken (28), an dem das Abstreifelement (30) angeordnet ist, angeordnet ist und vorzugsweise wie das Abstreifelement (30) ausgebildet ist,
wobei:
das mindestens eine weitere Abstreifelement (30) so an dem Schubbalken (28) angeordnet ist, dass es beim Bewegen des Schubbalkens (28) in der Transportrichtung (T) der Fördervorrichtung (16) in mindestens eine weitere Gasse (32) der mehreren Gassen (32) zum Streifen über die Überschubfläche (20) entlang der jeweiligen weiteren Gasse (32) eintaucht.

12. Fördervorrichtung (16) nach einem der vorherigen Ansprüche, wobei mindestens eines erfüllt ist von:
das umlaufende Förderelement (24) ist oberhalb von und/oder beabstandet zu der Überschubfläche (20) angeordnet;
das umlaufende Förderelement (24) läuft vollständig oberhalb von der Überschubfläche (20) um;
die mehreren Schubbalken (28) sind oberhalb von und/oder beabstandet zu der Überschubfläche (20) angeordnet;
die mehreren Schubbalken (28) sind quer zur einer Transportrichtung (T) der Fördervorrichtung (16) angeordnet;
die Fördervorrichtung (16) weist ferner ein weiteres umlaufendes Förderelement (26), vorzugsweise Förderkette oder Förderriemen, auf, das gegenüberliegend zu dem umlaufenden Förderelement (24), vorzugsweise oberhalb der Überschubfläche (20), angeordnet ist, wobei die mehreren Schubbalken (28) an dem weiteren umlaufenden Förderelement (26) beabstandet voneinander angebracht und jeweils zwischen dem umlaufenden Förderelement (24) und dem weiteren umlaufenden Förderelement (26) angeordnet sind; und
die Fördervorrichtung (16) weist ferner eine Überschubplatte (22) auf, die oberseitig die Überschubfläche (20) aufweist.

13. Verpackungssystem (10) zum Verpacken von Artikeln (A), vorzugsweise Behältern, wobei das Verpackungssystem aufweist:
eine Fördervorrichtung (16) nach einem der vorherigen Ansprüche; und
eine Verpackungsvorrichtung (12) zum Verpacken der Artikel (A) mit einem Verpackungsmaterial,
wobei vorzugsweise:
die Verpackungsvorrichtung (12) stromabwärts von der Fördervorrichtung (16) oder oberhalb von der Überschubfläche (20) der Fördervorrichtung (16) angeordnet ist, vorzugsweise zum Verpacken der mittels der mehreren Schubbalken (28) bewegten Artikel (A).

14. Verfahren zum Schmieren und/oder Reinigen einer Fördervorrichtung (16) nach einem der Ansprüche 1 bis 12 oder eines Verpackungssystems (10) nach Anspruch 13, wobei das Verfahren aufweist:
Applizieren eines Reinigungs- und/oder Schmiermittels auf die Überschubfläche (20), vorzugsweise mittels einer Reinigungs- und/oder Schmiervorrichtung (36);
Verteilen des applizierten Reinigungs- und/oder Schmiermittels über die Überschubfläche (20) mittels des Abstreifelements (30) beim Umlaufen des Schubbalkens (28), an dem das Abstreifelement (30) angeordnet ist.

15. Verfahren nach Anspruch 14, ferner aufweisend:
Beaufschlagen des Abstreifelements (30) zum Kontaktieren der Überschubfläche (20) mittels magnetischer Wechselwirkung zwischen einem Magneten (46, 48), der in oder an dem Abstreifelement (30) und/oder in oder an einem das Abstreifelement (30) haltenden Halteelement (44) angeordnet ist, und der Überschubfläche (20) oder einem unter der Überschubfläche (20) angeordnetem metallischen Element; und/oder
Erfassen einer Position des Schubbalkens (28), an dem das Abstreifelement (30) angeordnet ist, oder des Abstreifelements (30),
wobei das Applizieren des Reinigungs- und/oder Schmiermittels auf die Überschubfläche (20) abhängig von der erfassten Position erfolgt, vorzugsweise zum Applizieren des Reinigungs- und/oder Schmiermittels auf einen Applikationsbereich (B) der Überschubfläche (20) unmittelbar bevor das Abstreifelement (30) den Applikationsbereich (B) erreicht und/oder unmittelbar bevor das Abstreifelement (30) die Reinigungs- und/oder Schmiervorrichtung (36) passiert.
